# EUROPÄISCHE PATENTANMELDUNG

(11) **EP 1 584 849 A2**
(43) Veröffentlichungstag der Anmeldung: **12.10.2005**
(21) Anmeldenummer: 05004991.5
(22) Anmeldetag: 08.03.2005
(51) Int. Cl.: F16H 61/32

(54) **Automatgetriebe mit einem am Getriebegehäuse angeordneten Aktuator**

(30) Priorität: 06.04.2004 DE 102004016903
(71) Anmelder: ZF FRIEDRICHSHAFEN AG, 88038 Friedrichshafen (DE)
(72) Erfinder: Winkel, Matthias, 88250 Weingarten (DE); Lochard, Jérome, 88045 Friedrichshafen (DE)

(57) **Zusammenfassung**

Die Erfindung betrifft ein Automatgetriebe mit wenigstens einem am Getriebegehäuse (4) angeordneten Aktuator (8). Zur Reduzierung von Reparatur- und/oder Wartungskosten ist vorgesehen, dass der wenigstens eine Aktuator (8, 8a, 8b, 8c) derart am Getriebegehäuse (4) angeordnet ist, dass dieser ohne Ausbau des Automatgetriebes (13, 14) aus einem Fahrzeug frei zugänglich ist.

## Beschreibung

Die Erfindung betrifft ein Automatgetriebe mit einem am Getriebegehäuse angeordneten Aktuator gemäß dem Oberbegriff des Patentanspruchs 1 sowie ein Kraftfahrzeug gemäß dem Oberbegriff des Anspruchs 12.

Aus der DE 101 43 325 A1 ist ein Automatgetriebe bekannt, bei dem die Aktuatoren für die Durchführung von gangschaltungsbezogenen Wähl- und Einlegebewegungen auf der Oberseite des Getriebegehäuses angeordnet sind. Eine solche Anordnung kann zwar für die Montage eines solchen Getriebes von Vorteil sein, nach dessen Einbau in ein Fahrzeug ist diese Aktuatorplatzierung jedoch eher hinderlich. Sofern an einem solchen Aktuator oder an einer diesem räumlich zugeordneten Steuerungs- und Regelungselektronik des Getriebes Reparaturarbeiten durchzuführen oder diese komplett auszutauschen sind, so stören bei bekannten Automatgetrieben sowie Fahrzeugantriebssträngen dabei durchweg andere Fahrzeug- oder Antriebsstrangbauteile, wie beispielsweise Turbolader, Leitungen oder der Fahrzeugboden. Aus diesem Grund ist zur Durchführung derartiger Arbeiten bei den bekannten Automatgetrieben bisher der komplette Ausbau des Getriebes notwendig, welches vor allem aus Servicekostengesichtspunkten als nachteilig beurteilt wird.

Vor diesem Hintergrund liegt der Erfindung die Aufgabe zugrunde, ein Automatgetriebe vorzustellen, bei dem der wenigstens eine Aktuator für eine Wartung oder Reparatur auch ohne vollständigen Ausbau des Getriebes aus einem Fahrzeug leicht zugänglich ist.

Die Lösung dieser Aufgabe ergibt sich für das Automatgetriebe aus den Merkmalen des Hauptanspruchs sowie für das Fahrzeug aus den Merkmalen des Anspruchs 12. Vorteilhafte Weiterbildungen und Ausgestaltungen der Erfindung sind den abhängigen Ansprüchen entnehmbar.

Der Erfindung liegt die Erkenntnis zugrunde, dass der wenigstens eine Aktuator dann im Servicefall leichter zugänglich ist, wenn dieser nicht an der Oberseite des Getriebegehäuses angeordnet ist und/oder dasselbe schwenkbar und/oder drehbar in Kraftfahrzeug angeordnet ist.

Demnach geht die Erfindung zunächst aus von einem Automatgetriebe mit wenigstens einem am Getriebegehäuse angeordneten Aktuator, bei dem zur Lösung der gestellten Aufgabe vorgesehen ist, dass der wenigstens eine Aktuator derart am Getriebegehäuse angeordnet ist, dass dieser ohne Ausbau des Getriebes aus einem Fahrzeug beispielsweise für einen Kraftfahrzeugmechaniker frei zugänglich ist.

Gemäß einer bevorzugten Ausgestaltung der Erfindung ist der wenigstens eine Aktuator an der Unterseite des Getriebegehäuses angeordnet. In anderen Fällen kann es wegen der Platzverhältnisse im Fahrzeug schon ausreichend sein, wenn der wenigstens eine Aktuator an der Seite des Getriebegehäuses platziert ist.

Technisch aufwendigere Abwandlungen der Erfindung sehen vor, dass das Getriebegehäuse oder ein Getriebegehäuseteil um eine Schwenkachse schwenkbar am Fahrzeug gelagert ist und hierzu geeignete Lagervorrichtungen sowohl am Automatgetriebe als auch an zugeordneten Fahrzeugteilen vorhanden sind.

Sofern das Automatgetriebe schwenkbar ausgebildet ist, wird es als besonders vorteilhaft beurteilt, wenn die Schwenkachse im wesentlichen quer zur Längserstreckung des Automatgetriebes ausgerichtet ist.

Eine in der Regel aufwendigere Lagerung wird am Getriebegehäuse und am genannten Fahrzeugteil vorzusehen sein, wenn das Getriebegehäuse oder ein Getriebegehäuseteil um seine Längsachse drehbar ausgebildet sein soll, wodurch vorzugsweise jeder Ort am Umfang des Getriebegehäuses in eine für den Fahrzeugmechaniker günstige Position drehbar ist.

Zur Reduzierung des technischen Aufwands für die freie Zugänglichkeit des wenigstens einen Aktuators am Getriebegehäuse kann vorgesehen sein, dass das Getriebegehäuse oder ein Getriebegehäuseteil um wenigstens 90° dreh- und/oder schwenkbar gelagert ist. Im Fall der Schwenkbarkeit wird das Automatgetriebe aus einer im wesentlichen horizontalen Lage im Fahrzeug in eine im wesentlichen vertikale Lage gebracht, so dass dies aus Sicht eines unter dem Fahrzeug stehenden Fahrzeugmechanikers die beste technische Lösung darstellt. Für den Fall, dass das Getriebe nur um seine Längsachse drehgelagert ist, erfüllt eine Drehbarkeit des Getriebes oder eines Getriebegehäuseteils um 90° die Mindestanforderung für die freie Zugänglichkeit zu einem Aktuator, welcher in der Betriebsposition des Getriebes auf der Oberseite des Getriebegehäuses angeordnet ist. Besser wäre jedoch eine Drehbarkeit um 180°.

Eine erfindungsgemäße Ausbildung des Automatgetriebes ist vor allem für solche Getriebetypen von besonderem Interesse, bei denen der wenigstens eine Aktuator im kupplungsglockenfernen Bereich des Getriebegehäuses an demselben angeordnet ist.

Da die Steuerungs- und Regelungselektronik des Automatgetriebes nahe dem genannten wenigstens einen Aktuator angeordnet werden kann, ist auch diese bei einem erfindungsgemäß ausgebildeten Automatgetriebe hinsichtlich Reparaturarbeiten vorteilhaft erreichbar.

Erwähnt werden soll, dass der wenigstens eine Aktuator als hydraulisch, pneumatisch oder elektrisch betätigbarer Aktuator ausgebildet sein kann. Üblicherweise wird mehr als ein solcher Aktuator an einem Automatgetriebe, beispielsweise an einem automatisierten Schaltgetriebe oder einem lastschaltenden Doppelkupplungsgetriebe verbaut sein, um Gangwähl- sowie Gangeinlegebewegungen zu erzeugen.

Schließlich weist das erfindungsgemäß ausgebildete Automatgetriebe Vorrichtungen am Getriebegehäuse und/oder an dessen Kupplungsglocke auf, mit denen dieses an einem Fahrzeugbauteil, insbesondere der Fahrzeugkarosserie dreh- und/oder schwenkbar gelagert ist, oder im Service-Fall an diesen mittels geeigneter Befestigungsmittel, wie beispielsweise Drehbolzen oder Drehlager, dreh- und/oder schwenkbar lagerbar ist.

Letztlich betrifft die Erfindung auch ein Kraftfahrzeug, welches derart ausgebildet ist, dass an diesem ein wie beschrieben aufgebautes Automatgetriebe dreh- und/oder schwenkbar als Teil eines Fahrzeugantriebsstranges aufgenommen ist. Daher verfügt dieses Fahrzeug über eine Karosserie, einen Antriebsmotor und das Automatgetriebe, an dessen Getriebegehäuse wenigstens ein Aktuator angeordnet ist. Zudem ist vorgesehen, dass an dem Automatgetriebe und an einem Fahrzeugbauteil, insbesondere an der Fahrzeugkarosserie, Schwenk- und/oder Drehvorrichtungen für das Automatgetriebe angeordnet sind oder im Service-Fall anbaubar sind.

Zur Verdeutlichung der Erfindung ist der Beschreibung eine Zeichnung beigefügt, mit deren Hilfe zwei Ausführungsbeispiele erläuterbar sind.

Darin zeigen:
- Fig. 1: eine schematische Seitensicht eines Kraftfahrzeugantriebsstranges mit einem schwenkbar angeordneten Automatgetriebe und
- Fig. 2: eine Draufsicht auf einen Kraftfahrzeugantriebsstrang mit einem um seine Längsachse drehbar gelagerten Automatgetriebe.

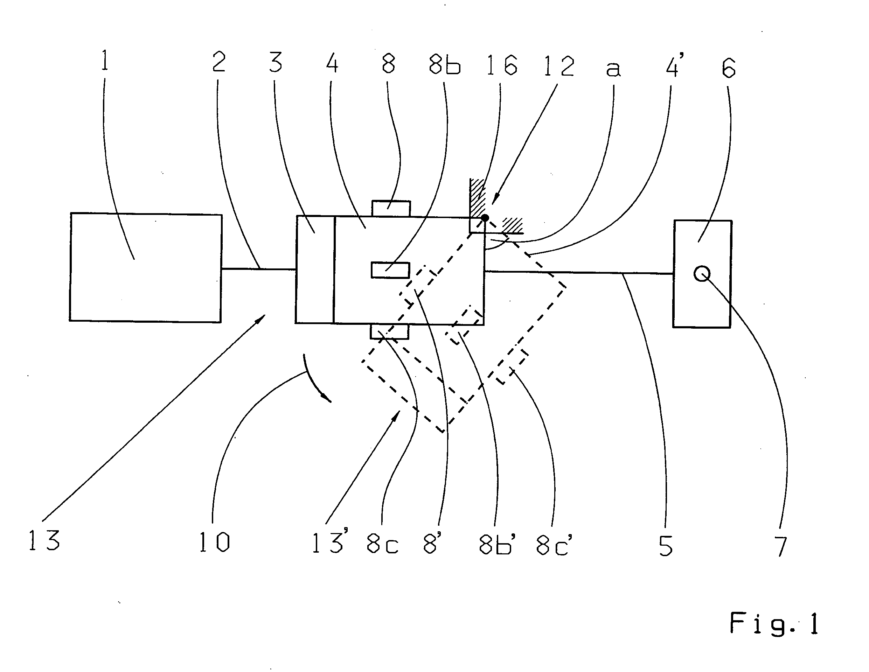

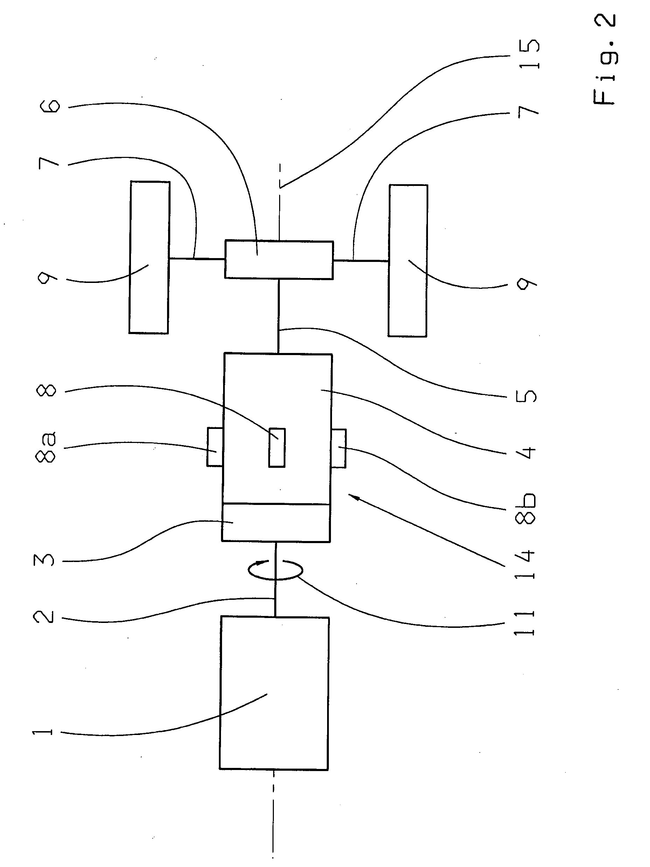

Demnach zeigt Fig. 1 einen Kraftfahrzeugantriebsstrang in einer Seitenansicht, bei dem ein Antriebsmotor 1 mit einem als automatisiertes Schaltgetriebe ausgebildeten Automatgetriebe 13 über eine Motorwelle 2 antriebswirksam verbunden ist. Abtriebsseitig vom Automatgetriebe 13 ist eine Getriebeabtriebswelle 5 erkennbar, mit der ein Differentialgetriebe 6 antreibbar ist. Wie vor allem Fig. 2 zeigt, gehen von diesem Differentialgetriebe 6 zwei Achsantriebswelle 7 seitlich ab, die das Antriebsmoment auf die Fahrzeugräder 9 übertragen.

An dem Getriebegehäuse 4 des Automatgetriebes 13 sind mit Abstand zur Kupplungsglocke 3 alternativ oder additiv zueinander Aktuatoren 8, 8a, 8b und 8c angeordnet. Diesen Aktuatoren 8, 8a, 8b, 8c kann die Steuerungs- und Regelungselektronik des Getriebes unmittelbar oder benachbart zugeordnet sein. Gemäß einer ersten Variante der Erfindung ist wenigstens ein Aktuator 8c an der Unterseite des Getriebegehäuses 4 angeordnet, wodurch dieser für einen unterhalb des Antriebsstranges stehenden Fahrzeugmechaniker zur Durchführung von Wartungs- und/oder Reparaturarbeiten leicht zugänglich ist.

Gemäß einer anderen in Fig. 1 dargestellten Variante ist der wenigstens eine Aktuator 8a, 8b an der Seite des Getriebegehäuses 4 angeordnet. Gegenüber dem bekannten Stand der Technik stellt diese Anordnung bereits eine Verbesserung im Hinblick auf das zu lösende technische Problem dar, da an einigen Fahrzeugtypen in diesem Bereich ausreichend Freiraum für Arbeiten an den Aktuatoren bzw. an der Steuerungs- und Regelungseinrichtung des Getriebes zur Verfügung steht.

Sofern in einer dritten Variante der Erfindung vorgesehen ist, dass der wenigstens eine Aktuator 8 wie bisher üblich an der Oberseite des Getriebegehäuses 4 angeordnet ist, sieht die Erfindung vor, dass das Automatgetriebe 13 mittels Schwenkvorrichtungen am Getriebegehäuse 4 und an einem Kraftfahrzeugbauteil, hier an der Fahrzeugkarosserie 16, um einen Winkel "a" um eine Schenkachse 12 schwenkbar gelagert ausgebildet ist, welche im wesentlichen horizontal bzw. quer zur Längsachse 15 des Automatgetriebes ausgerichtet ist.

Wie Fig. 1 anhand der gestrichelten Darstellung des Automatgetriebes 13' verdeutlicht, kann das Getriebegehäuse 4' samt der Aktuatoren 8', 8a, 8b' bzw. 8c' um die Schenkachse 12 in Richtung des Schwenkbewegungspfeils 10 um den Winkel "a" von wenigstens 45°, bevorzugt jedoch 90°, aus dem Antriebsstrang heraus- und nach unten geschwenkt werden. Im Ergebnis sind dadurch alle Positionen am Umfang des Getriebegehäuses 4' leicht für einen Fahrzeugmechaniker erreichbar.

Gemäß einer in Fig. 2 gezeigten weiteren Variante der Erfindung kann das Automatgetriebe 14 bzw. dessen Getriebegehäuse 4 auch derart ausgebildet sein, dass dieses um seine Längsachse 15 drehbar an wenigstens einem Fahrzeugbauteil gelagert ist. Wie der Drehrichtungspfeil 11 andeutet, ist durch ein solches Drehen des Getriebes 14 jede Stelle am axialen Außenumfang des Getriebegehäuses 4 und somit jeder der Aktuatoren 8, 8a, 8b, 8c für einen Fahrzeugmechanischer leicht erreichbar, wenn er sich beispielsweise unterhalb des Fahrzeuges an einer Hebebühne befindet.

Es ist Bestandteil der Erfindung, dass auch das Fahrzeug bzw. dessen Karosserie oder andere geeignete Fahrzeugteile Lagerbauteile aufweisen, die mit zugeordneten Lagerbauteilen an dem Getriebegehäuse 4 der Automatgetriebe 13, 14 zur Realisierung der Schenk- und/oder Drehbewegung des Automatgetriebes zusammenwirken.

### Bezugszeichen

- 1: Antriebsmotor
- 2: Motorwelle
- 3: Kupplungsglocke
- 4: Getriebegehäuse
- 4': Getriebegehäuse, geschwenkt
- 5: Getriebeabtriebswelle
- 6: Differentialgetriebe
- 7: Achsantriebswelle
- 8: Aktuator; Steuerungs- und Regelungselektronik
- 8': Aktuator; Steuerungs- und Regelungselektronik, geschwenkt
- 8a: Aktuator; Steuerungs- und Regelungselektronik
- 8b: Aktuator; Steuerungs- und Regelungselektronik
- 8b': Aktuator; Steuerungs- und Regelungselektronik, geschwenkt
- 8c: Aktuator; Steuerungs- und Regelungselektronik
- 8c': Aktuator; Steuerungs- und Regelungselektronik, geschwenkt
- 9: Fahrzeugrad
- 10: Schwenkrichtung
- 11: Drehrichtung
- 12: Schwenkachse
- 13: Automatgetriebe
- 13': Automatgetriebe, geschwenkt
- 14: Automatgetriebe
- 15: Längsachse
- 16: Fahrzeugkarosserie

- a: Schwenkwinkel

## Patentansprüche

1. Automatgetriebe mit wenigstens einem am Getriebegehäuse angeordneten Aktuator, **dadurch gekennzeichnet, dass** der wenigstens eine die Aktuator (8, 8a, 8b, 8c) derart am Getriebegehäuse (4) angeordnet ist, dass dieser ohne Ausbau des Getriebes (13, 14) aus einem Fahrzeug frei zugänglich ist.

2. Automatgetriebe nach Anspruch 1, **dadurch gekennzeichnet, dass** der wenigstens eine Aktuator (8c) an der Unterseite des Getriebegehäuses (4) angeordnet ist.

3. Automatgetriebe nach Anspruch 1 oder 2, **dadurch gekennzeichnet, dass** der wenigstens eine Aktuator (8a, 8b) an der Seite des Getriebegehäuses (4) angeordnet ist.

4. Automatgetriebe nach Anspruch 1, **dadurch gekennzeichnet, dass** das Getriebegehäuse (4) um eine Schenkachse (12) schwenkbar am Fahrzeug gelagert ist.

5. Automatgetriebe nach Anspruch 4, **dadurch gekennzeichnet, dass** die Schwenkachse (12) im wesentlichen quer zur Längserstreckung des Automatgetriebes (13) ausgerichtet ist.

6. Automatgetriebe nach wenigstens einem der Ansprüche 1 bis 5, **dadurch gekennzeichnet, dass** das Getriebegehäuse oder ein Getriebegehäuseteil (4) um seine Längsachse (15) drehbar gelagert ist.

7. Automatgetriebe nach wenigstens einem der vorherigen Ansprüche, durch **gekennzeichnet**, dass das Getriebegehäuse oder ein Getriebegehäuseteil (13, 14) um wenigstens 90° dreh- und/oder schwenkbar gelagert ist.

8. Automatgetriebe nach wenigstens einem der vorherigen Ansprüche, durch **gekennzeichnet**, dass der wenigstens eine Aktuator (8, 8a, 8b, 8c) im kupplungsglockenfernen Bereich des Getriebegehäuses (4) an demselben angeordnet ist.

9. Automatgetriebe nach wenigstens einem der vorherigen Ansprüche, durch **gekennzeichnet**, dass die Steuerungs- und Regelungselektronik des Automatgetriebes (13, 14) im Bereich des wenigstens einen Aktuators (8, 8a, 8b, 8c) angeordnet ist.

10. Automatgetriebe nach wenigstens einem der vorherigen Ansprüche, durch **gekennzeichnet**, dass der wenigstens eine Aktuator (8, 8a, 8b, 8c) als hydraulisch, pneumatisch oder elektrisch betätigbarer Aktuator ausgebildet ist.

11. Automatgetriebe nach wenigstens einem der vorherigen Ansprüche, durch **gekennzeichnet**, dass dieses Getriebe (13, 14) Vorrichtungen am Getriebegehäuse (4) und/oder an dessen Kupplungsglocke (3) aufweist, mit denen dieses an einem Fahrzeugbauteil, insbesondere der Fahrzeugkarosserie (16), dreh- und/oder schwenkbar gelagert ist, oder im Service-Fall dreh- und/oder schwenkbar lagerbar ist.

12. Kraftfahrzeug mit einer Karosserie (16), einem Antriebsmotor (1) und einem Automatgetriebe (13, 14), an dessen Getriebegehäuse (4) wenigstens ein Aktuator (8) angeordnet ist, durch **gekennzeichnet**, dass an dem Automatgetriebe (13, 14) und an einem Fahrzeugbauteil, insbesondere an der Fahrzeugkarosserie (16), Schwenk- und/oder Drehvorrichtungen angeordnet oder im Service-Fall befestigbar sind.
